**Europäisches Patentamt**

(19) **European Patent Office**

**Office européen des brevets**

(11) Numéro de publication: **0 210 448**
**B1**

(12) # FASCICULE DE BREVET EUROPÉEN

(45) Date de publication du fascicule du brevet:
**31.05.89**

(51) Int. Cl.⁴: **A 23 L 1/20,** A 23 L 1/36

(21) Numéro de dépôt: **86108885.4**

(22) Date de dépôt: **30.06.86**

(54) **Procédé de préparation d'un produit alimentaire à base de protéines végétales.**

(30) Priorité: **29.07.85 CH 3276/85**

(43) Date de publication de la demande:
**04.02.87 Bulletin 87/6**

(45) Mention de la délivrance du brevet:
**31.05.89 Bulletin 89/22**

(84) Etats contractants désignés:
**AT BE DE FR IT LU NL SE**

(56) Documents cité:
**EP-A-0 035 676**
**CH-A-531 838**
**FR-A-1 463 569**
**FR-A-2 389 338**
**US-A-2 182 175**
**US-A-3 142 571**
**US-A-3 162 536**
**US-A-3 800 056**

(73) Titulaire: **SOCIETE DES PRODUITS NESTLE S.A.,**
**Case postale 353, CH- 1800 Vevey (CH)**

(72) Inventeur: **Ammann, Ulrich, Weidstrasse 9, CH-**
**8122 Pfaffhausen (CH)**

## Description

La présente invention a pour objet un procédé de préparation d'un produit alimentaire à base de protéines végétales, par façonnage d'une pâte de matière protéique végétale et d'eau, cuisson et séchage, ainsi que le produit obtenu par ce procédé.

On connaît divers produits alimentaires solides, par opposition aux produits alimentaires liquides, préparés à partir de matières protéiques végétales. On peut nommer p. ex. le tofu (fromage de soja) ou le yuba (feuille de lait de soja coagulé enroulée sur elle-même) parmi les produits traditionnels originaires du sud-est de l'Asie, ou les succédanés de viande tels que protéines filées ou protéines texturées par cuisson-extrusion parmi les produits d'origine relativement récente.

Alors que les produits traditionnels tels que le tofu et le yuba sont toujours très populaires dans leurs pays d'origine et commencent à apparaître sur les marchés typiquement occidentaux, les protéines filées ou texturées par cuisson-extrusion n'ont pas rencontré le succès escompté pour des raisons de coût excessif ou de rejet du concept du succédané de viande.

D'autres produits ont été développés dans l'idée soit d'abaisser le coût de production en utilisant des procédés et installations plus simples, soit de modifier le concept organoleptique du produit en ne cherchant pas à imiter la viande.

C'est ainsi qu'un procédé connu de préparation d'un aliment à base de protéine, décrit dans FR-2 148 217, consiste à former une pâte gélifiable en mélangeant de l'eau, une protéine végétale isolée, au moins un autre ingrédient choisi parmi les glucides et les lipides, éventuellement d'autres protéines, des arômes et un peu de gélatine, ajuster le pH de la pâte à une valeur légèrement acide, soumettre la pâte à un traitement thermique pour obtenir un gel homogène, et réduire sa teneur en eau à 5 - 45 %. Le produit ainsi obtenu présente une texture élastique, il peut être fumé et débité en tranches minces translucides et consommé en guise de viande des Grisons p. ex. Ce procédé est simple mais sa réalisation nécessite l'usage de protéines végétales isolées en combinaison avec divers autres ingrédients.

Un autre procédé connu de préparation d'un produit alimentaire à base de protéines végétales, notamment de soja, décrit dans GB-1 526 998, consiste à sécher sur cylindre une suspension colloïdale de protéines végétales et de matière grasse, détacher du cylindre un film cohérent de suspension colloïdale séchée, humidifier le film, et replier ou enrouler le film sur lui-même de manière à former une masse feuilletée humide ou laminat de plusieurs centimètres d'épaisseur. Cette masse peut être cuite telle quelle ou après congélation et dégel et débitée en tranches comme un fromage d'Italie p. ex. Le produit ainsi obtenu est bon, original et simple à fabriquer. Cependant, il se prête mieux à la consommation à l'état frais ou après surgélation qu'après déshydratation.

Un autre procédé connu, décrit dans FR-2 119 489, consiste à préparer une pâte de protéine contenant une protéine végétale isolée ou concentrée en mélange avec du blanc d'oeuf ou de la lactalbumine ou de la gélatine, travailler et former une feuille de cette pâte dans un laminoir à deux rouleaux tournant à des vitesses différentes pour exercer un effet de friction sur la pâte, découper la feuille en brins, réunir les brins en faisceau, ajouter un liant et stabiliser le tout par chauffage. La masse ainsi obtenue présente une texture fibreuse qui rappelle celle de la viande.

Un autre procédé connu, décrit dans US-3 840 679 et dérivé du précédent, permet d'obtenir la même texture fibreuse qui rappelle celle de la viande à partir des mêmes ingrédients mais en remplaçant l'étape du découpage de la feuille de protéine en brins par une étape de crêpage de la feuille au moment où elle est détachée d'un dernier rouleau du laminoir.

Encore un autre procédé connu, décrit dans US-3 911 157 et dérivé des deux précédents, consiste à préparer une pâte en mélangeant de l'eau et des flocons de soja dégraissés réduits ou non en farine ou gruau par broyage, laminer la pâte en forme de feuille très mince entre les rouleaux d'un laminoir tournant à des vitesses différentes pour exercer un fort effet de friction sur la feuille, cuire la feuille à la vapeur humide, sécher la feuille et la réduire en flocons par broyage. Les flocons reconstitués présentent une texture résistante sous la dent comparable à celle de la viande et peuvent être utilisés pour remplacer une partie de la viande hâchée dans la confection de hamburgers p. ex.

Enfin, un autre procédé connu, décrit dans WO 82/03750, consiste à préparer une pâte en mélangeant de l'eau et des flocons, une farine ou un gruau de soja dégraissé, former une feuille ou un boudin de cette pâte par extrusion ou laminage en conditions douces, autrement dit en évitant d'exercer des effets de friction sur la pâte, découper la feuille ou le boudin en articles individuels, cuire les articles en présence d'un agent coagulant des protéines, à savoir en présence d'un acide ou d'un sel de métal alcalino ferreux, et sécher les articles. Les articles réhydratés présentent une texture et une apparence rappelant celles de la viande.

En outre, US-2 182 175 décrit un procédé de fabrication de flocons de soja grillés pour petit-déjeuner, dans lequel on broye et moud des fèves de soja, on soumet la farine à un traitement à la vapeur, on y ajoute un agent liant tel qu'une dextrine, un sirop de maïs, des mélasses ou du tapioca, on en prépare une pâte, on la cuit dans une marmite, on la déshydrate partiellement et on la découpe en articles individuels que l'on grille.

La présente invention a pour but de proposer un procédé de préparation d'un produit alimentaire à base de protéines végétales qui, sans recourir non plus aux techniques onéreuses et délicates du filage ou de la cuisson-extrusion et sans impliquer l'usage d'un agent, chimique de coagulation, permette d'obtenir à partir d'une matière protéique végétale entière un produit déshydraté qui présente après reconstitution une couleur naturelle, une flaveur agréable et une texture originale qui ne rappellent pas celles de la viande mais soient

EP 0 210 448 B1

attrayantes en elles-mêmes.

A cet effet, le procédé selon la présente invention est caractérisé par le fait que l'on soumet des graines de légumineuses ou d'oléagineuses à un premier traitement à la vapeur, on les broye, on les mélange avec de l'eau pour préparer une pâte à 50 - 70 % en poids de matière sèche, on façonne la pàte, on la soumet à un second traitement à la vapeur, on la sèche et on en découpe des articles individuels avant ou après le séchage.

On a constaté en effet qu'il est possible de préparer de cette manière un produit déshydraté qui présente après reconstitution une couleur proche de la couleur naturelle des graines de légumineuses ou d'oléagineuses utilisées, une flaveur agréable proche notamment de celle de la noisette et une texture originale tendre et croquante intermédiaire entre celle des pommes de terre cuites entières et celle des pâtes alimentaires cuites al dente.

Le produit obtenu par le procédé selon la présente invention est en particulier caractérisé par le fait qu'après 5 - 10 min de cuisson dans de l'eau contenant 4 g de chlorure de sodium par 1 lesdits articles présentent une teneur en eau de 55 - 60 % en poids et une résistance à la compression de 300 - 550 N.

Dans le présent exposé, l'expression "texture intermédiaire entre celle des pommes de terre cuites entières et celle des pâtes alimentaires cuites al dente" signifie une résistance sous la dent et une consistance en bouche qui se situent dans un domaine délimité du côté de la résistance plus faible et de la consistance plus pâteuse par les pommes de terre cuites entières dans l'eau ou à la vapeur juste le temps qu'il faut pour que leur chair s'attendrisse et perde le goût d'amidon cru mais sans qu'elle se désagrège, et du côté de la résistance plus forte et de la consistance moins pâteuse par les pâtes alimentaires cuites dans l'eau juste le temps qu'il faut pour qu'elles perdent le goût de farine crue mais qu'elles restent croquantes.

De même, l'expression "une résistance à la compression de tant et tant de N" signifie une résistance sous la dent et une consistance en bouche telles qu'on peut les déterminer à l'aide d'un appareil adéquat qui mesure la force nécessaire pour presser un échantillon de produit cuit au travers d'une plaque perforée. Les conditions précises dans lesquelles la résistance à la compression est déterminée sont présentées plus loin, juste avant les exemples.

Pour mettre en oeuvre le présent procédé, on peut utiliser les graines de légumineuses ou d'oléagineuses les plus diverses, telles que les fèves de soja, les haricots blancs, les pois jaunes, les graines de coton ou les graines d'arachides p. ex. On les utilise de préférence après les avoir écossées ou dépelliculées afin d'obtenir un produit présentant une couleur plus franche et une texture plus lisse.

Pour réaliser ledit premier traitement à la vapeur de ces graines, on peut utiliser une vapeur d'eau saturée ou légèrement surchauffée à des températures de environ 100 - 130°C à des pressions comprises entre la pression atmosphérique et environ 3 bar p.ex. Ce premier traitement à la vapeur exerce un effet déterminant sur la texture et la flaveur que présente le produit final reconstitué et il devrait durer de préférence de 30 s à 5 min. Si le premier traitement dure moins de 30 s, le produit final reconstitué peut présenter une texture coriace au lieu de tendre et croquante ainsi qu'une flaveur désagréable. Si le premier traitement dure plus de 15 min, le produit final reconstitué peut présenter une texture rugueuse et sableuse au lieu de lisse et homogène, ainsi qu'un défaut de couleur.

On broye donc les graines après ce premier traitement à la vapeur. La finesse de ce broyage n'a pas une très grande influence sur la texture que présente le produit final reconstitué. Cependant, si le broyage est trop grossier et que les particules de graines obtenues présentent un diamètre moyen supérieur à environ 1 mm, cette texture risque également de devenir sableuse. C'est ainsi que l'on broye de préférence les graines de manière à obtenir des particules dont au moins 97 % en poids de graines broyées ont un diamètre moyen inférieur à 0,3 mm et 20 % au plus ont un diamètre moyen inférieur à 0,05 mm. Màis on peut également broyer les graines de manière à obtenir une semoule ou une farine p. ex.

On mélange donc ensuite les graines broyées avec de l'eau pour préparer une pâte à 50 - 70 % en poids de matière sèche. Des teneurs en matière sèche inférieures à 50 ou supérieures à 70 % ont également une influence défavorable sur la texture et la couleur que le produit final présente à la reconstitution. Une teneur en matière sèche inférieure à 50 % donne une texture plus coriace ou plus grossière selon la manière dont on façonne ensuite la pâte. Une teneur en matière sèche supérieure à 70 % donne une texture plus sableuse. On réalise de préférence cette étape du mélange avec vigueur durant un temps relativement court de environ 5 - 60 s suffisant pour obtenir une pâte homogène travaillable sans abîmer sa texture et sans risquer de développer des goûts, odeurs ou couleurs indésirables. Quoique ce ne soit pas une option préférée, on peut également ajouter à la pâte lors du mélange des arômes, renforçateurs d'arômes, vitamines, colorants ou antioxydants p. ex., la somme de ces additifs ne devant pas représenter plus de quelques % poids de la pâte.

On peut ensuite façonner la pâte par laminage ou extrusion p. ex., de préférence dans des conditions douces, à savoir en évitant autant que possible d'exercer des effets de friction sur la pâte. Si l'on façonne la pâte par laminage, on peut utiliser p. ex. un laminoir à deux rouleaux en faisant tourner les deux rouleaux en sens contraire et en synchronisme, autrement dit à la même vitesse circonférentielle. On peut exercer sur les rouleaux une pression linéaire, autrement dit une pression par unité de longueur des rouleaux comprise entre environ 5 - 1500 x $10^3$ N/m. Cette pression linéaire de même que la teneur en eau de la pâte ont un effet sur l'épaisseur de la feuille de pâte laminée obtenue. Pour un même interstice entre les rouleaux, une augmentation de cette pression linéaire ou un abaissement de cette teneur en eau provoquent une diminution d'épaisseur de la feuille. Si l'on reste dans les domaines indiqués de pression et de teneur en eau, ces variations d'épaisseur n'entraînent pas d'effet néfaste sur la texture du produit final reconstitué. C'est ainsi que l'on peut laminer la pâte de préférence à une épaisseur de environ 0,8 - 1,5 mm si l'on désire en découper

3

ensuite des articles individuels en forme de flocons ou de nouilles, ou à une épaisseur de environ 2,5 à 5,0 mm si l'on désire en découper ensuite des articles en forme de brins trapus de section carrée p. ex.

Si l'on façonne la pâte par extrusion, on utilise de préférence des filières présentant des ouvertures individuelles relativement grandes et une surface totale d'ouverture relativement importante afin de ne pas devoir recourir à des pressions d'extrusion trop grandes. C'est ainsi que l'on extrude de préférence la pâte sous une pression de environ 2 - 20 bar.

Pour réaliser ledit second traitement à la vapeur de cette pâte façonnée, on peut également utiliser une vapeur d'eau saturée ou légèrement surchauffée à des températures de environ 100 - 130°C à des pressions comprises entre la pression atmosphérique et environ 3 bar p. ex. Ce second traitement à la vapeur exerce également un effet déterminant sur la texture et la flaveur que présente le produit final reconstitué et il devrait durer de préférence de 30 s à 15 min. Si le second traitement dure moins de 30 s et que ledit premier traitement a duré moins de 30 s, le produit final reconstitué peut présenter une texture coriace et une flaveur désagréable. Si le second traitement dure moins de 30 s et que ledit premier traitement a duré de 30 s à 15 min, le produit final reconstitué peut présenter une texture trop molle ou une cohésion insuffisante. Si le second traitement dure plus de 15 min, le produit final reconstitué peut perdre son attrait organoleptique. Cependant, la somme des deux traitements est de préférence égale à au moins 10 min de manière à suffisamment éliminer le facteur antitrypsique. On sèche ensuite la pâte façonnée, avant ou après l'avoir découpée en articles individuels. On peut réaliser ce séchage à l'air chaud à température modérée et à pression atmosphérique p. ex. C'est ainsi que l'on sèche de préférence la pâte à l'air chaud à environ 70 - 90°C durant 1 - 4 h, le temps nécessaire pour que la teneur en eau résiduelle de la pâte soit de environ 3 - 4 % en poids.

On découpe enfin la pâte façonnée en articles individuels avant ou après le séchage, selon la forme que l'on veut donner auxdits articles. Pour obtenir des articles en forme de nouilles p. ex. on préfère découper à la longueur voulue avant séchage des brins plats que l'on aura obtenus par extrusion ou par découpage d'une feuille obtenue elle-même par laminage. On peut procéder de manière analogue pour obtenir des articles plus courts en forme de brins trapus de section carrée p. ex. Pour obtenir des articles en forme de flocons p. ex., on peut découper ou briser en morceaux après séchage une feuille laminée. Enfin, pour obtenir des articles de formes plus complexes tels que des coquilles p. ex., on peut également découper la pâte avant séchage, juste après la formation des coquilles par extrusion au travers d'une filière adéquate.

Le produit final obtenu par le procédé selon la présente invention se présente donc sous la forme d'articles individuels déshydratés qui, après 5 - 10 min de cuisson dans de l'eau contenant 4 g de chlorure de sodium par 1 présentent une teneur en eau de 50 - 67 % en poids et une résistance à la compression de 300 - 550 N. Le produit final reconstitué qui répond à cette définition présente effectivement une texture intermédiaire entre celle des pommes de terre cuites entières et celle des pâtes alimentaires cuites al dente. Si le produit présente une résistance à la compression inférieure à 300 N, il est trop mou et risque de se désagréger. S'il présente une résistance à la compression supérieure à 550 N, il est trop coriace et présente une texture qui rappelle davantage celle de fragments de viande que celle des pâtes alimentaires cuites al dente.

Lorsque lesdits articles présentent la forme de nouilles ou de flocons, leur épaisseur est de préférence comprise entre environ 0,7 et 1,4 mm à l'état déshydraté et entre environ 1,0 et 2,0 mm après réhydratation. Un produit plus mince risque en particulier de présenter une texture trop coriace après réhydratation. Un produit plus épais est concevable, mais on préfère alors le présenter sous forme d'articles individuels différents tels que des segments courts de lanière de section carrée p. ex.

Le présent produit réhydraté par cuisson durant 5 - 10 min dans de l'eau contenant 4 g de chlorure de sodium par 1 présente donc une texture originale tendre et croquante, une flaveur agréable et une couleur proche de la couleur naturelle des graines de légumineuses ou d'oléagineuses utilisées pour sa préparation. Il peut être consommé tel quel au beurre, en salade ou come garniture de potage, en sauce comme un émincé ou sauté à la poêle p. ex. Il peut être consommé seul ou comme accompagnement de légumes ou de viande p. ex.

Les exemples ci-après sont présentés les uns à titre d'illustration de la présente invention et les autres à titre de comparaison. Les pourcentages y sont donnés en poids.

Dans ces exemples, la résistance à la compression et éventuellement la couleur des produits décrits ont été déterminées selon les procédures respectives suivantes:

## Détermination de la résistance à la compression

40 g de produit déshydraté sont plongés et laissés 5 - 10 min dans 400 ml d'eau bouillante contenant 1,6 g de chlorure de sodium. Cet échantillon de produit réhydraté est égoutté et placé dans une cellule de mesure parallélipipédique ouverte sur le dessus et présentant un fond formé d'une plaque carrée de 50 cm$^2$ percée de 94 trous de 6 mm de diamètre.

A l'aide d'un piston de section carrée coulissant et descendant dans la cellule à la vitesse de 8,33 mm/s, on presse l'échantillon de produit reconstitué au travers de la plaque perforée tout en enregistrant automatiquement sur du papier millimétré la courbe de la force exercée sur le piston en fonction du chemin parcouru. La courbe présente deux portions approximativement linéaires correspondant la première à une compression de l'échantillon avant qu'il ne se mette à traverser la plaque et la deuxième au pressage de l'échantillon à travers la plaque. L'intersection des droites correspondant à ces deux portions de courbe est considérée comme définissant la force minimale à exercer sur l'échantillon pour le presser à travers la plaque. La résistance à la compression est définie comme étant égale à cette force minimale.

## Détermination de la couleur

On prépare un échantillon de produit en le réduisant soit en une farine dont le diamètre de toutes les particules est inférieur à 0,2 mm, soit en une seule dont le diamètre moyen des particules est compris entre environ 0,2 et 0,5 mm. On en forme une couche de 2 cm d'épaisseur dans un tube métallique à fond plat en verre incolore transparent. On dirige sur la surface extérieure de ce fond, sous un angle de 45°, une lumière du type C de la CIE (Commission Internationale de l'Eclairage) autrement dit une lumière correspondant à la lumière moyenne du jour présentant une température de couleur de 6774°K. A l'aide de trois détecteurs munis de filtres rouge, vert et bleu on détecte perpendiculairement à la surface de l'échantillon les trois composantes X, Y et Z (selon système CIE) de la couleur de la lumière, réfléchie par l'échantillon. A l'aide de ces composantes trichromatiques, on détermine les valeurs Lab ainsi que la saturation C de la couleur de l'échantillon, les définitions respectives de ces valeurs étant

$$L = 10,0\sqrt{Y}, a = 17,5 (1,02 X - Y)/\sqrt{Y}, b = 7,0 (Y - 0,847Z)/\sqrt{Y} \text{ et } C = \sqrt{a^2 + b^2}.$$

Dans ce système Lab, les valeurs ainsi déterminées sont reportées dans un système de coordonnées à trois dimensions où l'axe vertical est l'axe de la luminosité L, l'abscisse "a" conduit du vert (valeurs a négatives) au rouge (valeurs a positives) et l'ordonnée "b" va du bleu (valeurs b négatives) au jaune (valeurs b positives).

Un même échantillon est placé dans la cuvette, mesuré, ôté de la cuvette, remis dans la cuvette et remesuré cinq fois de suite. On prend ensuite la moyenne arithmétique des valeurs Lab et C ainsi déterminées.

## Exemple comparatif (i)

On cuit des pommes de terre entières dans l'eau salée juste le temps qu'il faut pour que leur chair s'attendrisse et perde le goût d'amidon cru mais sans qu'elle se désagrège. Elles présentent alors une teneur en eau de 78 %. On détermine la résistance à la compression d'un échantillon de 100 g de ces pommes de terre cuites entières à l'aide de la même cellule et dans les mêmes conditions que celles décrites ci-dessus. On trouve une valeur de 293 N.

## Exemple comparatif (ii)

On cuit des pâtes alimentaires à la semoule de blé dur et aux oeufs dans l'eau salée juste le temps qu'il faut pour qu'elles perdent le goût de farine crue mais qu'elles restent croquantes, autrement dit pour qu'elles soient al dente. Elles présentent alors une teneur en eau de 62 %. On détermine la résistance à la compression d'un échantillon de 100 g de ces pâtes alimentaires cuites al dente à l'aide de la même cellule et dans les mêmes conditions que celles décrites ci-dessus. On trouve une valeur de 533 N.

## Exemple 1

On traite à la vapeur saturée à pression atmosphérique à 100°C durant 4 min des fèves de soja ex USA dépelliculées. On les broye dans un moulin à marteau de manière à obtenir des particules dont le diamètre moyen présente la distribution suivante exprimée en en poids de fèves broyées:

| diamètre moyen mm | proportion % |
|---|---|
| supérieur à 0,315 | 2,4 |
| 0,25 | 3,6 |
| 0,20 | 4,4 |
| 0,15 | 8,0 |
| 0,10 | 12,8 |
| 0,075 | 14,8 |
| 0,05 | 34,0 |
| inférieur à 0,05 | 20,0 |

On soumet les fèves broyées à un mélange ou brassage vigoureux avec de l'eau durant 50 s, à raison de 550 g d'eau par kg de fèves broyées qui présentent elles-mêmes une teneur en matière sèche de 91 %. On obtient une pâte travaillable dont la teneur en matière sèche est de 59 %. On façonne la pâte par laminage sous une pression linéaire de 500 x 10³ N/m dans un laminoir à deux rouleaux parallèles de 15 cm de diamètre. L'interstice entre les rouleaux est de 0,4 mm. Les rouleaux tournent en synchronisme en sens contraire à une vitesse circonférentielle de 15 cm/s.

On lamine ainsi la pâte à une épaisseur de 0,9 mm. On traite la feuille ainsi obtenue à la vapeur saturée à 100°C à pression atmosphérique durant 10 min. Après ce traitement, la feuille présente une teneur en matière sèche de 60 %. On la sèche à l'air chaud à 80°C durant 2,5 h de sorte qu'elle présente une teneur en eau résiduelle de 4 %. On la brise ou découpe en flocons irréguliers présentant un diamètre moyen de environ 1 - 2 cm, une épaisseur de 0,8 mm et une couleur jaune proche de celle des fèves dépelliculées de départ.

Après réhydratation par une cuisson de 5 min dans de l'eau contenant 4 g de sel par 1 ces flocons présentent une épaisseur de 1,2 mm, une teneur en eau de 65 % et une résistance à la compression de 338 N. Leur texture rappelle celle des pommes de terre cuites entières mais elle est un peu plus ferme et croquante. Leur couleur demeure proche de celle des fèves dépelliculées de départ. Leur flaveur rappelle un peu celle de la noisette et ne présente pas de note désagréable ou amère.

### Exemples comparatifs (iii) à (vii) et Exemple 2

(iii) On procède de la manière décrite à l'exemple 1, à l'exception du fait que l'on réalise le premier traitement à la vapeur durant 20 s au lieu de 4 min. Les flocons réhydratés présentent une flaveur amère et une texture coriace.

(iv) On procède de la manière décrite à l'exemple 1, à l'exception du fait que l'on réalise le premier traitement à la vapeur durant 16 min au lieu de 4 min. Les flocons réhydratés présentent une texture sableuse et une couleur légèrement rougeâtre.

(v)-(vii) et 2 On procède de la manière décrite à l'exemple 1, à l'exception du fait que l'on fait durer chaque traitement à la vapeur 0 ou 10 min. Les durées respectives des traitements à la vapeur et les qualités organoleptiques des flocons réhydratés sont regroupées dans le tableau ci-après:

| Exemples comparatifs | Traitement à la vapeur | | Flocons réhydratés | |
|---|---|---|---|---|
| | 1er min | second min | texture | flaveur |
| (v) | 0 | 0 | coriace | désagréable, amère |
| (vi) | 0 | 10 | coriace | désagréable |
| (vii) | 10 | 0 | molle | doucâtre |
| Exemple 2 | 10 | 10 | tendre et croquante | relativement neutre, agréable |

Ce tableau illustre bien l'importance de la combinaison des deux traitements à la vapeur pour la réussite du présent procédé. Les deux traitements à la vapeur semblent avoir un effet complémentaire sur la texture du produit final réhydraté, le premier assurant qu'elle soit suffisamment tendre et le second assurant qu'elle ne le soit pas trop. En outre, le premier traitement à la vapeur a une influence décisive sur la flaveur du produit final à cause probablement de l'inactivation d'enzymes déclenchant des réactions irréversibles responsables de flaveurs désagréables et amères. On peut noter enfin que la somme des deux traitements à la vapeur joue un rôle nutritionnel important en assurant l'inactivation du facteur antitrypsique et qu'elle garantit également de bonnes qualités de conservation du produit final déshydraté.

### Exemple 3

On procède de la manière décrite à l'exemple 1, à l'exception du fait que l'on mélange les fèves broyées avec ce l'eau à raison de 450 g au lieu de 550 g d'eau par kg de fèves broyées et que la pâte travaillable obtenue présente donc une teneur en matière sèche de 63 %. Les flocons réhydratés présentent une texture encore plus proche de celle des pommes de terre cuites entières que celle des flocons réhydratés de l'exemple 1.

## Exemple 4

On procède de la manière décrite à l'exemple 1, à l'exception du fait que l'on mélange les fèves broyées avec de l'eau à raison de 650 g au lieu de 550 g d'eau par kg de fèves broyées et que la pâte travaillable obtenue présente donc une teneur en matière sèche de 55 %. Les flocons réhydratés présentent une texture plus proche de celle des pâtes alimentaires cuites al dente que celle des flocons réhydratés de l'exemple 1.

## Exemple 5 - 16

On procède de la manière décrite à l'exemple 1, à l'exception du fait que l'on prépare trois pâtes présentant des teneurs en matière sèche respectives de 55, 59 et 63 % et qu'on les façonne chacune par laminage sous des pressions linéaires de 5, 40, 500 et 1000 x 10³ N/m. On observe particulièrement l'effet des variations respectives de la teneur en eau de la pâte et de la pression linéaire dans le laminoir sur l'épaisseur des flocons à l'état déshydraté et après réhydratation. On obtient les valeurs regroupées dans le tableau ci-après:

| Exemple No. | Pression linéaire 10³ N/m | Teneur en matière sèche de la pâte % | Epaisseur des flocons déshydratés mm | réhydratés mm |
|---|---|---|---|---|
| 5 | 5 | 55 | 1,0 | 1,7 |
| 6 | 5 | 59 | 1,1 | 1,5 |
| 7 | 5 | 63 | 1,3 | 1,8 |
| 8 | 40 | 55 | 0,8 | 1,4 |
| 9 | 40 | 59 | 0,9 | 1,2 |
| 10 | 40 | 63 | 1,1 | 1,6 |
| 11 | 500 | 55 | 0,7 | 1,1 |
| 12 | 500 | 59 | 0,7 | 1,1 |
| 13 | 500 | 63 | 0,8 | 1,2 |
| 14 | 1000 | 55 | 0,7 | 1,0 |
| 15 | 1000 | 59 | 0,7 | 1,0 |
| 16 | 1000 | 63 | 0,7 | 1,1 |

Ce tableau illustre le fait qu'une augmentation de la pression linéaire et une augmentation de la teneur en eau de la pâte entraînent une diminution de l'épaisseur de la feuille de pâte laminée. Le corollaire de l'effet de ces variations de pression linéaire et de teneur en eau de la pâte est que la texture des flocons réhydratés ressemble d'autant plus à la texture des pâtes alimentaires cuites al dente que la pression linéaire est grande et que la teneur en matière sèche de la pâte est faible, pour autant que l'on reste dans les limites indiquées. Et réciproquement, la texture des flocons ressemble d'autant plus à celle des pommes de terre cuites entières que la pression linéaire est faible et que la teneur en matière sèche de la pâte est grande, dans les limites indiquées.

## Exemple 17

On procède de la manière décrite à l'exemple 1, à l'exception du fait que l'on façonne la pâte par extrusion et non par laminage. On extrude la pâte sous une pression de 3 bar dans une extrudeuse ou presse à pâtes alimentaires dont la filière permet d'obtenir des articles incurvés en forme de coquilles. On découpe ou tranche des coquilles individuelles bien formées et régulières à la sortie de la filière à l'aide d'un couteau rotatif, avant le séchage.

La paroi des coquilles présente une épaisseur de 1,3 mm à l'état déshydraté et de 1,8 mm après réhydratation par cuisson durant 10 min dans une eau contenant 4 g de chlorure de sodium par l. Après cette réhydratation, les coquilles présentent une teneur en eau de 59 % et une résistance à la compression de 485 N. Leur texture tendre, lisse et croquante rappelle celle des pâtes alimentaires cuites al dente.

## Exemple 18

On procède de la manière décrite à l'exemple 1 à l'exception du fait que l'on découpe la feuille de pâte laminée en forme de nouilles de 6 mm de large, avant le séchage. La couleur des nouilles réhydratées est semblable à celle des flocons réhydratés de l'exemple 1. La texture des nouilles réhydratées est intermédiaire entre celle des pommes de terre cuites entières et celle des pâtes alimentaires cuites al dente.

**Exemple 19**

On traite à la vapeur saturée à pression atmosphérique à 100°C durant 4 min des fèves de soja en USA dépelliculées. On les broye ou moud en farine. On les mélange vigoureusement avec de l'eau durant 50 s, à raison de 29 % d'eau et 71 % de fèves broyées qui présentent elles-mêmes une teneur en matière sèche de 92 %. On obtient une pâte travaillable dont la teneur en matière sèche est de 65 %. On façonne la pâte par laminage sous une pression linéaire de 1200 x 10³ N/m dans un laminoir à deux rouleaux parallèles de 15 cm de diamètre. L'interstice entre les rouleaux est de 0,4 mm. Les rouleaux tournent en synchronisme en sens contraire à une vitesse circonférentielle de 15 cm/s.

On lamine ainsi la pâte à une épaisseur de 0,9 mm. On obtient une feuille que l'on découpe en forme de nouilles de 6 mm de large. On traite ces nouilles en autoclave à la vapeur surchauffée à 115°C (cette vapeur étant saturée à 100°C), à pression atmosphérique durant 10 min. On sèche les nouilles à l'air chaud à 87°C durant 2 h. On obtient des nouilles de soja déshydratées qui présentent une teneur en eau résiduelle de 3,5 %, une épaisseur de 0,85 mm et une couleur jaune proche de celle des fèves dépelliculées de départ.

Après réhydratation par une cuisson de 5 min dans de l'eau contenant 4 g de chlorure de sodium par 1, ces nouilles présentent une épaisseur de 1,2 mm, une teneur en eau de 63 % et une résistance à la compression de 520 N. Leur texture rappelle celle des pâtes alimentaires cuites al dente. Leur couleur jaune naturelle demeure proche de celle des fèves dépelliculées de départ. Leur flaveur agréable et relativement neutre rappelle un peu celle de la noisette et ne présente en particulier aucune amertume.

**Exemple 20**

On procède de la manière décrite à l'exemple 19, à l'exception du fait que l'on remplace 5 % sur les 71 % de fèves broyées par un agent aromatisant à base d'hydrolisat de protéine végétale et de glutamate de sodium.

Ces nouilles réhydratées ne présentent par rapport aux nouilles réhydratées de l'exemple 19 qu'une différence de couleur et de flaveur. Leur couleur est jaune brunâtre et leur flaveur rappelle celle d'un bouillon de viande.

**Exemple 21**

On procède de la manière décrite à l'exemple 19, à l'exception du fait que l'on utilise des fèves ex canada au lieu des fèves ex USA. Ces nouilles réhydratées ne présentent guère de différence par rapport aux nouilles réhydratées de l'exemple 19 si ce n'est que leur couleur jaune est légèrement plus claire. Cette légère différence de couleur reflète fidèlement celle présentée par les fèves de départ.

**Exemple 22**

On procède de la manière décrite à l'exemple 1, à l'exception du fait qu'au lieu de confectionner des flocons, on façonne la pâte par laminage de manière à obtenir une feuille de 3 mm d'épaisseur et l'on découpe cette feuille en brins trapus de section carrée de 5 cm de longueur. Les brins trapus réhydratés présentent une texture intermédiaire entre celle des pommes de terre cuites entières et celle des pâtes alimentaires cuites al dente.

**Exemple comparatif (viii)**

On prépare une pâte à 67,5 de matière sèche en mélangeant 29 % d'eau et 71 % de farine de soja dégraissée du commerce contenant elle-même 5 % d'eau résiduelle. On façonne cette pâte par laminage avec friction entre deux rouleaux de 30 cm de diamètre séparés par un interstice de 0,15 mm et tournant en sens contraire à des vitesses circonférentielles différentes, leur rapport étant de 1 : 1,14. On obtient une feuille de 1,3 mm d'épaisseur. On découpe cette feuille en forme de nouilles de 6 mm de largeur. On sèche ces nouilles à 87 C durant 2 h. On obtient des nouilles de soja déshydratées de 1,1 mm d'épaisseur et contenant 3,5 d'eau résiduelle.

Après réhydratation par une cuisson de 5 min dans de l'eau contenant 4 g de chlorure de sodium par 1 ces nouilles présentent une épaisseur de 1,9 mm, une teneur en eau de 59 %, une résistance à la compression de 748 N, une couleur gris brunâtre, une flaveur légèrement amère et une texture coriace.

### Exemple comparatif (ix)

On procède de la manière décrite à l'exemple comparatif (viii) à l'exception du fait que l'on remplace 5 % sur les 71 % de farine de soja dégraissée par un agent aromatisant à base d'hydrolysat de protéine végétale.

On obtient des nouilles qui présentent à l'état déshydraté une épaisseur de 1,0 mm et après réhydratation une épaisseur de 1,6 mm, une teneur en eau de 62 %, une résistance à la compression de 645 N, une couleur gris brunâtre, une flaveur rappelant celle d'un bouillon de viande et une texture coriace.

### Exemple comparatif (x)

On procède de la manière décrite à l'exemple 20, à l'exception du fait que l'on remplace les 66 % de fèves broyées par de la farine de soja dégraissée du commerce.

Après réhydratation, les nouilles de soja ainsi obtenues présentent une teneur en eau de 59 %, une résistance à la compression de 715 N, une couleur gris brunâtre, une flaveur rappellant celle d'un bouillon de viande et une texture coriace.

### Exemple comparatif (xi)

On procède de la manière décrite à l'exemple 19, à l'exception du fait que l'on ne traite pas les fèves de soja à la vapeur avant de les broyer ou moudre en farine.

Après réhydratation, les nouilles de soja ainsi obtenues présentent une teneur en eau de 59 %, une résistance à la compresion de 770 N, une couleur jaunâtre, une flaveur désagréable et une texture coriace.

### Exemple comparatif (xii)

On procède de la manière décrite à l'exemple comparatif (xi), à l'exception du fait que l'on remplace 5 % sur les 71 % de farine de fèves broyées non traitées à la vapeur par un agent aromatisant à base d'hydrolysat de protéine végétale et de glutamate de sodium.

Après réhydratation, les nouilles de soja ainsi obtenues présentent une teneur en eau de 55 %, une résistance à la compression de 675 N, une couleur jaune brunâtre, une flaveur rappelant celle d'un bouillon de viande et une texture coriace.

### Couleur de la matière première et de divers produits illustrés

On détermine les composantes Lab et la saturation C de la couleur des diverses matières premières et de divers produits déshydratés illustrés dans les exemples ci-dessus, après réduction de ces matières premières et produits soit en farine soit en semoule.

Les résultats sont réunis dans le tableau ci-après:

| Echantillons réduits en semoule | Composantes Lab | | | Saturation |
|---|---|---|---|---|
| | L | a | b | C |
| pâtes à la semoule de blé dur selon ex. comp. (ii) | 79,1 | -1,2 | 27,0 | 27,0 |
| fèves de soja ex USA dépelliculées | 74,1 | -0,4 | 29,0 | 29,0 |
| flocons de soja selon exemple 1 | 72,5 | -0,6 | 29,0 | 29,0 |
| coquilles de soja selon exemple 17 | 71,0 | -0,5 | 29,0 | 29,0 |
| nouilles de soja selon exemple 19 | 72,5 | -1,0 | 28,7 | 28,8 |
| brins trapus de soja selon exemple 22 | 71,1 | 0,1 | 28,4 | 28,4 |
| fèves de soja ex Canada dépelliculées | 77,2 | -2,0 | 29,7 | 29,8 |
| flocons de soja selon exemple 21 | 73,5 | -1,1 | 29,5 | 29,5 |
| flocons de soja selon ex. comp. (x) | 62,7 | 2,2 | 23,2 | 23,3 |

| Echantillons réduits en farine | Composantes Lab | | | Saturation |
|---|---|---|---|---|
| | L | a | b | C |
| fèves de soja ex USA dépelliculées | 85,5 | -3,1 | 20,7 | 20,9 |
| fèves de soja ex Canada dépelliculées | 87,4 | -4,2 | 20,9 | 21,3 |
| farine de soja dégraissée du commerce | 84,4 | -1,6 | 13,0 | 13,1 |

Ce tableau illustre le fait que les produits obtenus par le présent procédé présentent une couleur naturelle proche de celle de la matière première utilisée. La couleur des flocons, coquilles, nouilles et brins trapus des exemples 1, 17, 19 et 22 présente le même ton, la même saturation et une luminosité presque aussi grande que celle des fèves de soja ex USA dépelliculées.

La couleur des présents produits peut être qualifiée de jaune clair et elle se rapproche beaucoup de celle présentée par les pâtes alimentaires à la semoule de blé dur et aux oeufs du commerce.

La couleur des flocons de l'exemple 21 présente une luminosité un peu plus grande que celle des flocons de l'exemple 1. Ceci reflète bien le fait que la couleur des fèves de soja ex Canada présente une luminosité légèrement plus grande que celle des fèves ex USA.

La couleur des flocons de l'exemple comparatif (x) se distingue de celle des présents produits par une luminosité plus faible, un ton plus rouge et une saturation moins grande. Cette couleur peut être qualifiée de jaune brunâtre. La couleur de la farine de soja dégraissée se distingue elle-même de celle des fèves de soja ex USA ou ex Canada dépelliculées par une luminosité légèrement plus faible et une saturation nettement moins grande.

## Revendications

1. Procédé de préparation d'un produit alimentaire à base de protéines végétales, par façonnage d'une pâte de matière protéique végétale et d'eau, cuisson et séchage, caractérisé par le fait que l'on soumet des graines de légumineuses ou d'oléagineuses à un premier traitement à la vapeur durant 30 s à 15 min à 100 - 130°C à une pression comprise entre la pression atmosphérique et 3 bar, on les broye, on les mélange avec de l'eau pour préparer une pâte à 50 - 70 % en poids de matière sèche, on façonne la pâte, on la soumet à un second traitement à la vapeur durant 30 s à 15 min à 100 - 130°C à une pression comprise entre la pression atmosphérique et 3 bar, on la sèche et on la découpe en articles individuels avant ou après le séchage.

2. Procédé selon la revendication 1, caractérisé par le fait que lesdites graines de légumineuses ou d'oléagineuses sont écossées ou dépelliculées.

3. Procédé selon la revendication 1, caractérisé par le fait que lesdites graines de légumineuses ou d'oléagineuses sont les fèves de soja, les haricots blancs, les pois jaunes, les graines de coton ou les graines d'arachides.

4. Procédé selon la revendication 1, caractérisé par le fait que l'on broye les graines de manière à obtenir des particules dont au moins 97 % en poids de graines broyées ont un diamètre moyen inférieur à 0,3 mm et 20 % au plus ont un diamètre moyen inférieur à 0,05 mm.

5. Procédé selon la revendication 1, caractérisé par le fait que l'on façonne la pâte par laminage entre des rouleaux sous une pression linéaire de $5 - 1500 \times 10^3$ N/m.

6. Procédé selon la revendication 5, caractérisé par le fait que l'on lamine la pâte à une épaisseur de 0,8 - 1,5 mm et qu'on la découpe en forme de nouilles ou de flocons.

7. Procédé selon la revendication 1, caractérisé par le fait que l'on façonne la pâte par extrusion sous une pression de 2 - 20 bar.

8. Procédé selon la revendication 1, caractérisé par le fait que l'on sèche la pâte façonnée jusqu'à une teneur en eau résiduelle de 3 - 4 % en poids.

9. Procédé selon la revendication 1, caractérisé par le fait que l'on sèche la pâte façonnée à l'air chaud à 70 - 90°C durant 1 - 4 h.

10. Produit alimentaire obtenu par le procédé selon la revendication 1, caractérisé par le fait qu'après 5 - 10 min de cuisson dans de l'eau contenant 4 g de chlorure de sodium par 1 lesdits articles présentent une teneur en eau de 50 - 67 % en poids et une résistance à la compression de 300 - 550 N.

11. Produit selon la revendication 10, caractérisé par le fait que lesdits articles ont une forme de nouilles ou de flocons présentant une épaisseur de 0,7 - 1,4 mm à l'état déshydraté et de 1,0 - 2,0 mm après réhydratation.

## Patentansprüche

1. Verfahren zur Herstellung eines Nahrungsmittels auf der Basis von pflanzlichen Proteinen, durch Formen, Kochen und Trocknen eines Teiges aus pflanzlichem Proteinmaterial und Wasser, dadurch gekennzeichnet, daß man die Samen von Hülsenfrüchten oder Ölfrüchten während 30 s bis 15 min bei 100 bis 130°C bei einem zwischen dem Atmosphärendrück und 3 bar liegenden Druck einer ersten Behandlung mit Wasserdampf unterwirft, daß man die Samen dann zerkleinert, mit Wasser vermischt, um einen Teig mit einem Gehalt an Trockensubstanz von 50 bis 70 Gew.-% herzustellen, den Teig formt, denselben einer zweiten Behandlung mit Wasserdampf während 30 s bis 15 min bei 100 bis 130°C und bei einem zwischen dem Atmosphärendruck und 3 bar liegenden Druck unterwirft, den Teig trocknet denselben vor oder nach dem Trocknen zu einzelnen Gegenständen zerschneidet.

2. Verfahren nach Anspruch 1, dadurch gekennzeichnet, daß die genannten Samen von Hülsenfrüchten oder Ölfrüchten enthülst oder geschält werden.

3. Verfahren nach Anspruch 1, dadurch gekennzeichnet, daß die genannten Samen von Hülsenfrüchten oder Ölfrüchten Sojabohnen, weiße Bohnen, gelbe Erbsen, Baumwollsamen oder Erdnüsse sind.

4. Verfahren nach Anspruch 1, dadurch gekennzeichnet, daß man die Samen auf solche Art und Weise zerkleinert, daß man Teilchen erhält, von denen wenigstens 97 Gew.-% der zerkleinerten Samen einen mittleren Durchmesser von weniger als 0,3 mm höchstens 20 % einen mittleren Durchmesser von unter 0,05 mm aufweisen.

5. Verfahren nach Anspruch 1, dadurch gekennzeichnet, daß man den Teig durch Auswalzen zwischen Walzen unter einem linearen Druck von 5 bis 1500 x 10³ N/m verformt.

6. Verfahren nach Anspruch 1, dadurch gekennzeichnet, daß man den Teig auf eine Dicke von 0,8 bis 1,5 mm auswalzt und daß man denselben auf die Form von Nudeln oder Flocken zerschneidet.

7. Verfahren nach Anspruch 1, dadurch gekennzeichnet, daß man den Teig durch Strangpressen unter einem Druck von 2 bis 20 bar verformt.

8. Verfahren nach Anspruch 1, dadurch gekennzeichnet, daß man den geformten Teig bis auf einen Restwassergehalt von 3 bis 4 Gew.-% trocknet.

9. Verfahren nach Anspruch 1, dadurch gekennzeichnet, daß man den geformten Teig mit Heißluft von 70 bis 90°C während 1 bis 4 h trocknet.

10. Nach dem Verfahren gemäß Anspruch 1 erhaltenes Nahrungsmittel, dadurch gekennzeichnet, daß die genannten Gegenstände nach 5 bis 10 min Kochen in Wasser mit einem Gehalt an 4 g Natriumchlorid/l einen Wassergehalt von 50 bis 67 Gew.-% eine Druckfestigkeit von 300 bis 550 N aufweisen.

11. Nahrungsmittel nach Anspruch 10, dadurch gekennzeichnet, daß die genannten Gegenstände eine Form von Nudeln oder Flocken mit einer Dicke von 0,7 bis 1,4 mm im dehydratisierten Zustand und von 1,0 bis 2,0 mm nach einer Rehydratisierung aufweisen.


## Claims

1. A process for preparing a food product based on vegetable proteins by forming a paste of vegetable protein material and water, cooking and drying, which comprises subjecting pulses or oilseeds to a first treatment with steam for 30 s to 15 min at 100 to 130°C under a pressure between atmospheric pressure and 3 bar, grinding them, mixing them with water to prepare a paste having a dry matter content of from 50 to 70 % by weight, shaping the paste, subjecting it to a second treatment with steam for 30 s to 15 min at 100 to 130°C under a pressure between atmospheric pressure and 3 bar, drying it and cutting it up into individual articles before or after drying.

2. A process as claimed in Claim 1, wherein the pulses or oilseeds are dehulled or deskinned.

3. A process as claimed in Claim 1, wherein the pulses or oilseeds are soya beans, kidney beans, yellow peas, cottonseeds or peanut seeds.

4. A process as claimed in Claim 1, wherein the seeds are ground to obtain particles of which at least 97 % by weight, based on ground seeds, have a mean diameter below 0.3 mm and at most 20 % a mean diameter below 0.05 mm.

5. A process as claimed in Claim 1, wherein the paste is shaped by rolling between rollers under a linear pressure of from 5 to 1500 x 10³ N/m.

6. A process as claimed in Claim 5, wherein the paste is rolled to a thickness of from 0.8 to 1.5 mm and is cut up into noodles or flakes.

7. A process as claimed in Claim 1, wherein the paste is shaped by extrusion under a pressure of from 2 to 20 bar.

8. A process as claimed in Claim 1, wherein the shaped paste is dried to a residual water content of from 3 to 4 % by weight.

9. A process as claimed in Claim 1, wherein the shaped paste is dried in hot air at 70 to 90°C for 1 to 4 h.

10. A food product obtained by the process claimed in Claim 1, wherein, after cooking for 5 to 10 min in water containing 4 g sodium chloride per litre, said articles have a water content of from 50 to 67 % by weight and a compressive strength of from 300 to 550 N.

11. The product claimed in Claim 10, wherein said articles are in the form of noodles or flakes having a thickness of from 0.7 to 1.4 mm in their dehydrated state and of from 1.0 to 2.0 mm after rehydration.